# EUROPEAN PATENT APPLICATION

(11) **EP 4 531 420 A1**
(43) Date of publication of application: **02.04.2025**
(21) Application number: 23200526.4
(22) Date of filing: 28.09.2023
(51) Int. Cl.: H04Q 11/00, H04J 14/02

(54) **OPTICAL COMBINER CIRCUITRY**

(71) Applicant: Nokia Solutions and Networks Oy, 02610 Espoo (FI)
(72) Inventor: Breyne, Laurens, 8770 Ingelmunster (BE); VERPLAETSE, Michiel, 9810 Nazareth (BE)
(74) Representative: IP HILLS NV

(57) **Abstract**

Example embodiments describe an optical combiner circuitry (210) for combining upstream optical signals originating from optical distribution networks, ODNs (120, 130), of respective passive optical networks, PONs (101, 102), to a shared optical line terminal (112), OLT, of one of the respective PONs; wherein the optical combiner circuitry comprises one or more NxN optical switches (220) configured to respectively route N ODN ports to N OLT ports according to adjustable routing states (200, 201); wherein the ODNs (120, 130) are connected to respective ODN ports (222, 224) of one or more NxN optical switches; and wherein the shared OLT (112) and one or more non-shared OLTs (111) are connected to respective OLT ports (221, 223) of one or more NxN optical switches.

## Description

### Field of the Invention

Various example embodiments relate to passive optical networks, PONs. In particular, various embodiments relate to dynamically combining optical distribution networks, ODNs, in PONs.

### Background of the Invention

In a passive optical network, PON, at least one optical line terminal, OLT, at the network side connects to one or more optical network units, ONUs, at the user side via an optical distribution network, ODN. An ODN has a tree structure comprising an optical feeder fibre that connects the OLT to one or more passive optical splitters/multiplexors, and a plurality of optical distribution fibres or drop fibres that connect a set of ONUs to the splitters/multiplexors.

Typically, PONs are completely separated from each other even when the OLTs are located at the same central office, e.g. when managed by the same telecommunication provider. Thus, traffic within a first PON cannot access hardware or functionalities of other PONs, or vice-versa. This has the problem that power consumption of the PONs can be sub-optimal as hardware and functionalities in some PONs remain active even during periods of limited traffic or no traffic within the PON.

### Summary of the Invention

The scope of protection sought for various embodiments of the invention is set out by the independent claims. The embodiments and features described in this specification that do not fall within the scope of the independent claims, if any, are to be interpreted as examples useful for understanding various embodiments of the invention.

Amongst others, it is an object of embodiments of the invention to provide an optical combiner circuitry that allows dynamically combining ODNs with limited impact on the performance of ONUs in the respective ODNs.

This object is achieved, according to a first example aspect of the present disclosure, by an optical combiner circuitry for combining upstream optical signals originating from optical distribution networks, ODNs, of respective passive optical networks, PONs, to a shared optical line terminal, OLT, of one of the respective PONs; wherein the optical combiner circuitry comprises one or more NxN optical switches configured to respectively route N ODN ports to N OLT ports according to adjustable routing states; wherein the ODNs are connected to respective ODN ports of one or more NxN optical switches; and wherein the shared OLT and one or more non-shared OLTs are connected to respective OLT ports of one or more NxN optical switches.

The one or more NxN optical switches comprise N input ports and N output ports, i.e. the ODN ports and the OLT ports respectively. The amount of ODN ports of the one or more NxN optical switches is thus equal to the amount of OLT ports. The amount of ODN ports and the amount of OLT ports of a NxN optical switch is at least two. The N ODN ports are respectively routed to the N OLT ports according to an adjustable routing state. In other words, an adjustable routing state defines internal optical paths or connections within an NxN optical switch between the ODN ports and the OLT ports. Each ODN port can only be routed to a single OLT port at the same time, i.e. in a certain adjustable routing state. An adjustable routing state thus defines N internal optical paths within an NxN optical switch. The one or more NxN optical switches may thus, for example, be 2x2 optical switches, 3x3 optical switches, 4x4 optical switches, or 6x6 optical switches.

The ODN ports and the OLT ports of one or more NxN optical switches are optically connected to respective ODNs and OLTs associated with respective PONs. For example, a first ODN port and a first OLT port of a 2x2 optical switch are respectively connected to the ODN and the OLT of a first PON; and a second ODN port and a second OLT port of the 2x2 optical switch are connected to the ODN and the OLT of a second PON. The optical combiner circuitry may comprise a plurality of interconnected NxN optical switches. In this case, some ODN ports and OLT ports of one or more NxN optical switches may optically be connected to respectively the OLT ports and ODN ports of other NxN optical switches.

One of the OLTs connected to the one or more NxN optical switches is the shared OLT. The other OLTs connected to the one or more NxN optical switches are the non-shared OLTs. In each adjustable routing state, one ODN port of a NxN optical switch is routed to the OLT port that is connected to the shared OLT.

The adjustable routing state of the one or more NxN optical switches thus allows optically connecting any one of the ODNs to the shared OLT and, thus, allows optically routing an upstream optical signal to the shared OLT. This allows the optical combiner circuitry to dynamically combine upstream optical signals originating from a plurality of ODNs in different PONs to a single shared OLT with limited insertion losses, i.e. a loss in optical power of upstream optical signals, as the optical combiner circuitry can combine upstream optical signals without an optical splitter. It is thus an advantage that the optical combiner circuitry does not comprise an optical splitter configured to combine upstream optical signals originating from ODNs. The limited insertion loss has the advantage that the optical combiner circuitry can be incorporated in PONs that operate close to their margin, i.e. that already operate close to their maximum loss budget.

The optical combiner circuitry further allows reducing the power consumption of a group of PONs by powering down one or more OLTs during periods of low traffic. The optical combiner circuitry further allows providing PON redundancy and protection switching with a limited additional power consumption by avoiding the power consumption associated with a standby OLT, e.g. in dual parented Type B protection according to the ITU G984.1 standard. It is a further advantage that the optical combiner circuitry can be incorporated between the ODNs and the OLTs of existing PONs. The optical combiner circuitry may, for example, be incorporated at a central office or somewhere along the optical feeder fibres of the respective PONs.

According to an example embodiment, the optical combiner circuitry may be operable in a combining mode and in a non-combining mode; wherein the one or more NxN optical switches route upstream optical signals to the shared OLT in the combining mode, and wherein the one or more NxN optical switches route upstream optical signals originating from the ODNs of respective PONs to the OLTs of the respective PONs in the non-combining mode.

In other words, when operating in the non-combining mode, the optical combiner circuitry may operate as a feed-through that connects the ODNs and the OLTs belonging to the same PON. When operating in the combining mode, the optical combiner circuitry may provide the upstream optical signals originating from the connected ODNs to the shared OLT by means of the one or more NxN optical switches.

According to an example embodiment, the optical combiner circuitry may comprise means configured to perform, when operating in the combining mode, adjusting the adjustable routing state of one or more NxN optical switches such that upstream optical signals are routed to the shared OLT.

Adjusting the adjustable routing state of one or more of the one or more NxN optical switches thus allows optically connecting any one of the ODNs to the shared OLT. This adjusting is preferably performed during the preamble of an upstream optical signal to avoid data loss. The adjusting may be performed upon detecting an upstream optical signal that is routed to an OLT port connected to a non-shared OLT. The adjustable routing state of one or more NxN optical switches may then be adjusted such that the ODN port from which the upstream optical signal originates is routed to the OLT port connected to the shared OLT. In doing so, the upstream optical signal is provided to the shared OLT.

According to an example embodiment, the shared OLT may be predetermined; and the optical combiner circuitry may further comprise means configured to perform detecting an upstream optical signal that is routed to the one or more non-shared OLTs.

The shared OLT may thus be a fixed one of the OLTs connected to an OLT port of the one or more NxN optical switches, i.e. a fixed one of the OLTs connected to the optical combiner circuitry. To this end, the optical combiner circuitry may comprise means for detecting an upstream optical signal that is routed to the non-shared OLTs. This allows detecting upstream optical signals that are not routed to the shared OLT, and thus, allows to detect when the adjustable routing state of the one or more NxN optical switches should be adjusted.

According to an example embodiment, the shared OLT may be configurable as one of the OLTs connected to an OLT port of the one or more NxN optical switches; and the optical combiner circuitry may further comprise means configured to perform detecting an upstream optical signal that is routed to any of the OLTs.

The shared OLT may thus be any one of the OLTs connected to an OLT port of the one or more NxN optical switches, i.e. any one of the OLTs connected to the optical combiner circuitry. As the shared OLT is configurable, the OLT that is configured as the shared OLT may change over time. To this end, the optical combiner circuitry may comprise means for detecting an upstream optical signal that is routed to any of the OLTs. This allows detecting upstream optical signals that are not routed to the OLT currently configured as the shared OLT, and thus, allows to detect when the adjustable routing state of the one or more NxN optical switches should be adjusted. This allows combining ODNs to any OLT connected to the optical combiner circuitry. This has the further advantage that when any of the connected OLTs fail, any other OLT connected to the optical combiner circuitry can temporarily handle the traffic originating from an ODN associated with the failed OLT to maintain traffic reliability.

According to an example embodiment, detecting an upstream optical signal may comprise detecting an optical power at an OLT port of the one or more NxN optical switches.

An upstream optical signal routed to a non-shared OLT may thus be detected by detecting an optical power on an optical connection between an OLT port of a NxN optical switch and an OLT. In other words, detecting an upstream optical signal may occur after the upstream optical signal has travelled through, or has been routed through, at least one NxN optical switch. This may be achieved by detection means connected to an optical fibre between an OLT port of the NxN optical switch and an OLT. The detection means may, for example, include an optical tap and a photodiode.

If the shared OLT is predetermined, these detection means may be connected to each optical connection between the non-shared OLTs and the OLT ports of the one or more NxN optical switches. If the shared OLT is configurable, these detection means may be connected to all optical connections between the OLT ports of the one or more NxN optical switches and the connected OLTs, i.e. both the shared OLT and non-shared OLTs.

According to an example embodiment, detecting an upstream optical signal may comprise detecting an optical power at the respective ODN ports of the one or more NxN optical switches, and tracking the adjustable routing state of the one or more NxN optical switches.

The optical combiner circuitry may thus comprise detection means configured to perform detecting an optical power on each optical connection between the optical combiner circuitry and the connected ODNs. The detection means may, for example, include an optical tap and a photodiode. In other words, detecting an upstream optical signal may occur before the upstream optical signal has travelled through, or has been routed through, a NxN optical switch. Based on a current adjustable routing state of the one or more NxN optical switches and a detected upstream optical signal at a certain ODN port, it can be determined to which OLT port the upstream optical signal will be routed. This has the further advantage that the sensitivity of the detection means, i.e. the optical power detection, can be higher relative to detecting an optical power at the OLT ports as the power of the upstream optical signal is not reduced by the limited insertion loss associated with the one or more NxN optical switches.

According to an example embodiment, the means configured to perform detecting an optical power comprise an optical tap and a photodiode.

According to an example embodiment, the optical combiner circuitry may further be configured to perform, when operating in the non-combining mode, maintaining the one or more NxN optical switches in an adjustable routing state that routes the ODNs of respective PONs to the OLTs of the respective PONs.

According to an example embodiment, the optical combiner circuitry may further be configured to perform operating in the combining mode or the non-combining mode based on the activity of an OLT connected to an NxN optical switch.

The operation mode, i.e. non-combining mode or combining mode, of the optical combiner circuitry may thus be based on the activity of one or more non-shared OLTs and/or the activity of the shared OLT. The activity of an OLT may refer to the presence of traffic within its PON, i.e. whether upstream optical signals are transmitted to the OLT and/or downstream optical signals are transmitted by the OLT. The optical combiner circuitry may be triggered or instructed to operate in the combining mode or in the non-combining mode by the activity of one or more OLTs, e.g. by powering down an OLT or not scheduling bursts for an OLT. To this end, the optical combiner circuitry may, for example, monitor the activity of the one or more OLTs. Alternatively, the optical combiner circuitry may receive an external control signal indicative for the activity of an OLT thereby instructing the optical combiner circuitry to change its operation mode. The optical combiner circuitry may, for example, operate according to the combining mode during a period of low traffic. In doing so, the limited traffic originating from the ODN associated with this non-shared OLT is routed to the shared OLT. This allows powering down the non-shared OLT, thereby reducing power consumption. A period of low traffic may, for example, occur during night time when the amount of users that consume traffic is limited, or during start-up or commissioning of PONs when only a limited number of users are distributed over multiple newly available PONs. The optical combiner circuitry may return to operating in the non-combining mode based on the activity of the shared OLT, e.g. when the activity of the shared OLT increases beyond the capacity of the shared OLT.

According to an example embodiment, the optical combiner circuitry may further comprise means configured to perform determining the activity of an OLT by detecting downstream optical signals originating from an OLT.

The means may, for example, include an optical tap and a photodiode connected to an optical connection that propagates downstream optical signals transmitted by a non-shared OLT. If no downstream optical signals originating from the non-shared OLT are detected, the optical combiner circuitry may operate in the combining mode as the activity of the non-shared OLT is low. This allows detecting OLTs that are under-utilized, OLTs that are unused, and/or OLTs that fail. Detecting an OLT that fails further allows the shared OLT to temporarily handle upstream optical signals originating from the ODN associated with the failed OLT, in addition to the traffic originating from the ODN associated with the shared OLT. This has the advantage that the service reliability associated with a standby OLT can be achieved without the power consumption and cost associated with an additional OLT, e.g. as in a type B protection according to the ITU G.984.1 standard.

According to an example embodiment, the optical combiner circuitry may further comprise means configured to perform determining the activity of an OLT by detecting a burst-less period indicative of a predetermined period without upstream optical signals scheduled for the OLT.

A burst-less period can be allocated by an OLT to the optical network units, ONUs, within an ODN. Upon detecting a burst-less period allocated by a non-shared OLT, the optical combiner circuitry may operate in the combining mode. Upon detecting a burst-less period allocated by the shared OLT, the optical combiner circuitry may operate in the non-combining mode. Detecting the burst-less period may be achieved by the means of the optical combiner circuitry that are configured to perform the detecting of upstream optical signals. This allows signalling the operation mode, i.e. combining mode or non-combining mode, from the OLTs to the optical combiner circuitry without additional components or circuitries.

According to an example embodiment, the optical combiner circuitry may further comprise means configured to perform determining the activity of an OLT by exchanging an electrical signal over an electrical interface between the OLT and the optical combiner circuitry.

The electrical signal may thus be indicative of the activity of one or more OLTs. This allows signalling the desired operation mode to the optical combiner circuitry without using an optical channel and limits the added insertion loss associated with an optical tap for determining the activity of an OLT.

According to an example embodiment, the one or more NxN optical switches are characterized by a switching time for switching between adjustable routing states that is substantially lower than a preamble length of upstream optical signals.

The switching time of an NxN optical switch may refer to the elapsed time to detect an upstream optical signal routed to a non-shared OLT and to adjust the adjustable routing state of the NxN optical switch from a first to a second adjustable routing state. Typical preamble lengths for PONs are around 150 ns for 50G PON according to the ITU G.9804 standard, around 130 ns for XGS PON according to the ITU G.9807 standard, and around 65 ns for XG PON according to the ITU G.987 standard. The switching time of the one or more NxN optical switches may, for example, be at most around 50 ns, and preferably between around 10 ns and around 15 ns, within a XGS PON. A switching time that is lower than the preamble length can allow avoiding data loss due to the adjusting of the routing state if the adjusting is performed during the preamble of an upstream optical signal. The one or more NxN optical switches may, for example, be electro-optic switches, acousto-optic switches, photonic crystal switches, or magneto-optic switches.

According to a second example aspect, an optical circuitry is disclosed comprising the optical combiner circuitry for combining upstream optical signals originating from ODNs of respective PONs to a shared OLT of one of the respective PONs according to the first aspect; and comprising means configured to perform providing downstream optical signals originating from the shared OLT to the ODNs of the respective PONs.

The optical circuitry thus allows dynamically combining upstream optical signals originating from a plurality of ODNs in different PONs to a single shared OLT with limited insertion losses, as the optical circuitry comprises the optical combiner circuitry according to the first aspect. The optical circuitry further comprises means configured to perform providing downstream optical signals transmitted by a single shared OLT to a plurality of ODNs in different PONs. In other words, the optical circuitry allows dynamically combining ODNs in the upstream, and sharing optical signals to all the ODNs in the downstream.

According to an example embodiment, the optical circuitry may comprise at least four wavelength-based splitters; and the means configured to perform providing downstream optical signals include at least one optical splitter, and at least one 1x2 optical switch.

The optical circuitry may comprise a pair of wavelength-based splitters for each PON connected to the optical circuitry, i.e. a wavelength-based splitter for each connected OLT and ODN. One of the wavelength-based splitters in the pair may be connected to the OLT to form an interface between the OLT and the optical circuitry. The other wavelength-based splitter in the pair may be connected to the ODN to form an interface between the optical circuitry and the ODN. The wavelength-based splitters allow to split a received optical signal into an upstream optical signal and a downstream optical signal based on its wavelength. The wavelength-based splitters may have a limited insertion loss compared to general purpose splitters as they are optimized to operate in the wavelength range of upstream and downstream signals in PONs. By the at least wavelength-based splitters, the upstream optical signals can be provided to and handled by the optical combiner circuitry, and the downstream optical signals can be provided to and handled by the means for providing downstream optical signals to the ODNs. These means may include at least one optical splitter and at least one 1x2 optical switch.

### Brief Description of the Drawings

Fig.1 shows a schematic block diagram of two example passive optical networks, PONs;
Fig. 2 shows an example embodiment of an optical combiner circuitry for dynamically combining upstream optical signals originating from different ODNs with limited insertion loss;
Fig. 3 shows an example embodiment of the upstream optical signal routing in the non-combining mode and in the combining mode by the optical combiner circuitry according to embodiments;
Fig. 4 shows an example embodiment of an optical combiner circuitry comprising a plurality of interconnected NxN optical switches;
Fig. 5A shows an example embodiment of an optical combiner circuitry with a configurable shared OLT and with optical detection means provided on the optical connections between OLTs and an NxN optical switch;
Fig. 5B shows an example embodiment of the optical combiner circuitry with optical detection means provided on the optical connections between ODNs and an NxN optical switch;
Fig. 6A shows an example embodiment of an optical circuitry comprising the optical combiner circuitry and means configured to perform providing downstream optical signals originating from a predetermined OLT to the ODNs of respective PONs; and
Fig. 6B shows an example embodiment of an optical circuitry for providing downstream optical signal originating from any of the connected OLTs to the ODNs.

### Detailed Description of Embodiment(s)

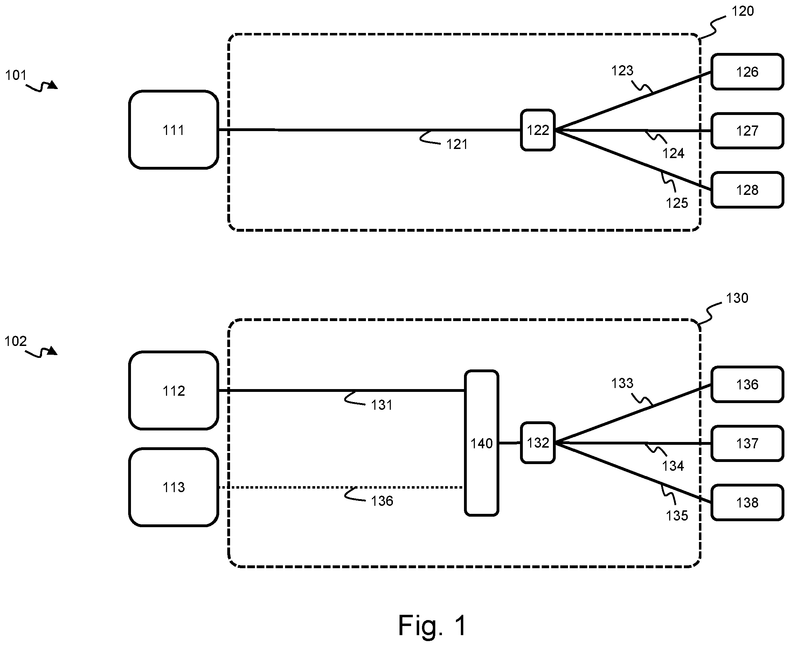

Fig.1 shows a schematic block diagram of two example passive optical networks, PONs 101, 102. The optical networks 101, 102 each comprise an optical line terminal 111, 112, OLT, and a plurality of optical network units, ONUs 126 - 128, 136 - 138 connected via an optical distribution network, ODN 120, 130. In this example, the OLTs 111, 112 of the respective PONs 101, 102 are connected to three ONUs 126 - 128, 136 - 138, however, the OLTs 111, 112 may be connected to fewer or more endpoints. The ODNs 120, 130 have a tree structure comprising an optical feeder fibre 121, 131, one or more passive optical splitters/multiplexors 122, 132, and a plurality of optical distribution fibres or drop fibres 123 - 125, 133 - 135 that connect the splitters/multiplexors 122, 132 to the respective ONUs 126 - 128, 136 - 138. In the downstream, the passive optical splitter/multiplexor 122, 132 splits the optical signal coming from the OLT111, 112 into lower power optical signals for the connected ONUs 126 - 128, 136 - 138, i.e. into downstream optical signals. While in the upstream direction, the passive optical splitter/multiplexor 122, 132 multiplexes the optical signals coming from the connected ONUs 126 - 128, 136 - 138 into a stream of bursts for the OLT 111, 112, i.e. upstream optical signals.

The respective passive optical networks 101, 102 may be a Gigabit passive optical network, GPON, according to the ITU-T G.984 standard, a 10x Gigabit passive optical network, 10G-PON, according to the ITU-T G.987 standard, a 10G symmetrical XGS-PON according to the ITU-T G.9807 standard, a four-channel 10G symmetrical NG-PON2 according to the ITU-T G.989 standard, a 25GS-PON, a 50G-PON according to the ITU-T G.9804 standard, or a next generation passive optical network, NG-PON. The passive optical networks 101, 102 may implement time-division multiplexing, TDM, or time- and wavelength-division multiplexing, TWDM.

Typically, respective PONs 101, 102 are completely separated even when the OLTs 111, 112 are located at the same central office, e.g. managed by a telecommunication provider. Thus, traffic within PON 101 cannot access hardware or functionalities of PON 102, or vice-versa. This has the problem that power consumption of the PONs 101, 102 can be sub-optimal as hardware and functionalities in some PONs remain active even during periods of limited traffic or no traffic within the PON. A period of low traffic may, for example, occur during night time when the amount of users that consume traffic is limited, or during commissioning and start-up of PONs when only a limited number of users are distributed over multiple newly available PONs.

Additionally, some PONs 102 may justify the addition of PON redundancy and protection switching to ensure service reliability. For example, dual parented Type B protection according to the ITU G.984.1 standard provides such PON redundancy by means of a standby OLT 113 and a redundant feeder fibre 136 that provide a back-up for a primary working OLT 112 and a primary feeder fibre 131. In this case, ONUs 136 - 138 within ODN 130 are both connected to the primary working OLT 112 and the standby OLT 113, e.g. via a 2xN optical splitter 140. During normal operation, the ONUs 136 - 138 of the ODN 130 communicate with the primary working OLT 112. When a fault occurs in the primary working OLT 112 or on the feeder fibre 131, services can be taken over by the standby OLT 113 and redundant feeder fibre 136, thereby improving service reliability. This has the problem that the standby OLT 113 increases power consumption and cost of the PON 102.

Combining ODNs 120, 130 belonging to different PONs 101, 102 such that they are serviced by a shared OLT can solve or at least alleviate the abovementioned problems as it allows powering down the OLTs that become unused due to the combining. This can allow reducing the overall power consumption of the managed PONs 101, 102. However, this requires additional or adapted hardware which typically impacts the performance of the respective PONs 101, 102. For example, a 1x2 optical splitter and a 1x2 optical switch can be used to combine two ODNs 120, 130 to a shared OLT, e.g. 112. This has the problem that the addition of the optical splitter introduces substantial additional insertion losses in the PONs 101, 102, i.e. a decrease of the optical signal power. Possible solutions to address this problem, e.g. an optical amplifier, typically consume substantial power thereby increasing the overall power consumption of the PONs 101, 102 again and defeating the purpose. Other possible solutions may be costly and difficult to implement in existing PONs, e.g. higher-class optics operating at a higher loss budget. It can thus be desirable to dynamically combine ODNs 120, 130 with limited impact on the performance of the PONs 101, 102.

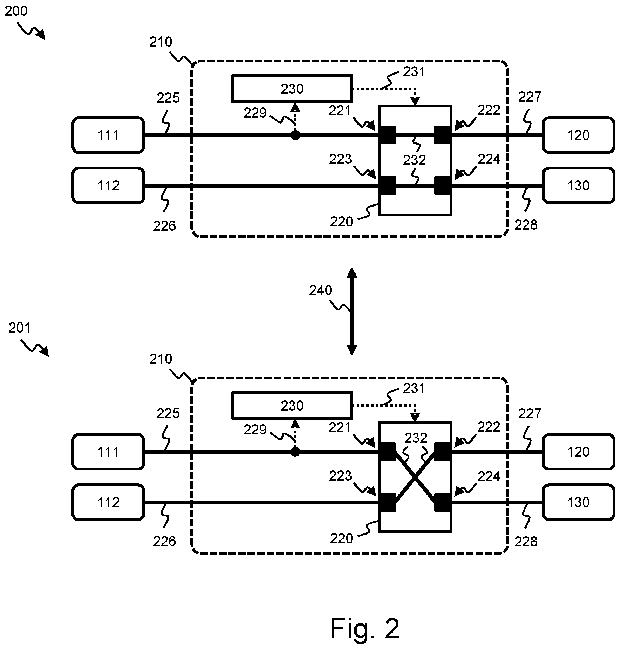

Fig. 2 shows an example embodiment of an optical combiner circuitry 210 for dynamically combining upstream optical signals originating from different ODNs 120, 130 with limited insertion loss. To this end, the optical combiner circuitry 210 comprises one or more NxN optical switches 220. The one or more NxN optical switches 220 are configured to respectively route N ODN ports 222, 224 to N OLT ports 221, 223 according to adjustable routing states 200, 201.

A NxN optical switch 220 thus comprises N input ports and N output ports, i.e. the ODN ports 222, 224 and the OLT ports 221, 223 respectively. The amount of ODN ports 222, 224 of a NxN optical switch 220 is thus the same as the amount of OLT ports 221, 223. The amount of ODN ports 222, 224 and the amount of OLT ports 221, 223 of a NxN optical switches 220 is at least two. It will be apparent that Fig. 2 illustrates an example embodiment of a 2x2 optical switch 220, i.e. N = 2, but that a NxN optical switch 220 may have a greater amount of ODN ports and OLT ports, e.g. a 3x3 optical switch, a 4x4 optical switch, a 6x6 optical switch, a 32x32 optical switch, or any other NxN optical switch where N is at least 2.

The N ODN ports 222, 224 are respectively routed to the N OLT ports 221, 223 according to an adjustable routing state 200, 201. In other words, an adjustable routing state 200, 201 defines internal optical paths 232 or connections between the ODN ports 222, 224 and the OLT ports 221, 223 within a NxN optical switch 220 along which optical signals can be propagated. Each ODN port 222, 224 can only be routed to a single OLT port 221, 223 at the same time, i.e. in a certain routing state 200, 201. In other words, each routing state 200, 201 defines a unique set of ODN port - OLT port pairs. The amount of possible routing states 200, 201 for a NxN optical switch 220 is thus defined by its amount of ODN ports 222, 224 and OLT ports 221, 223, i.e. N. For example, a 4x4 optical switch has 24 possible routing states and a 2x2 optical switch has 2 possible routing states.

The ODN ports 222, 224 of the NxN optical switch 220 are optically connected 227, 228 to respective ODNs 120, 130 of the respective PONs 101, 102. The OLT ports 221, 223 of the NxN optical switch are optically connected 225, 226 to the OLTs 111, 112 of the respective PONs 101, 102. Such optical connections can, for example, be achieved by means of optical fibres. For example, a first ODN port 222 and a first OLT port 221 of the 2x2 optical switch 220 in Fig. 2 are respectively connected to the ODN 120 and the OLT 111 of a first PON 101; and a second ODN port 224 and a second OLT port 223 of the 2x2 optical switch 220 are respectively connected to the ODN 120 and the OLT 130 of a second PON 102.

The optical combiner circuitry 210 may be operable in a combining mode and a non-combining mode. When operating in the combining mode, the NxN optical switch 220 routes the upstream optical signals originating from the connected ODNs 120, 130 to a shared OLT 112. In other words, upstream optical signals transmitted by ONUs within both ODN 120 and ODN 130 are routed to a shared OLT 112 in the combining mode. The shared OLT 112 is one of the OLTs 111, 112 connected to the NxN optical switch 220, i.e. an OLT that is connected to the optical combiner circuitry 210. The other OLTs 111 that are connected to the optical combiner circuitry are referred to as non-shared OLTs. When operating in the non-combining mode, the NxN optical switch 220 routes the upstream optical signals originating from the connected ODNs 120, 130 of respective PONs 101, 102 to the OLTs of said respective PONs. For example, an upstream optical signal from ODN 120 is routed to OLT 111, and an upstream optical signal from ODN 130 is routed to OLT 112 in the non-combining mode.

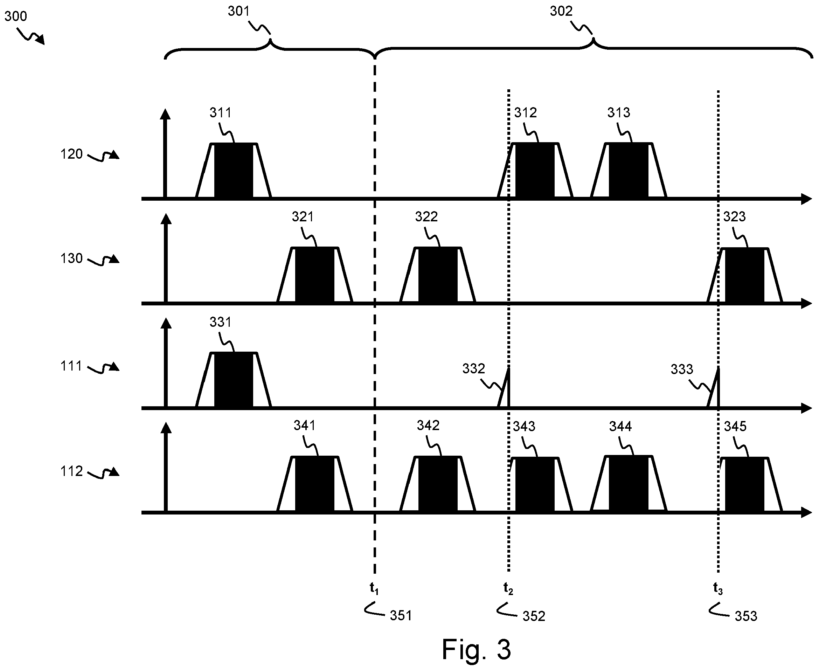

Fig. 3 shows an example embodiment of the routing of upstream optical signals in the non-combining mode 301 and in the combining mode 302 by the optical combiner circuitry 210 illustrated in Fig. 2. Fig. 3 shows upstream optical signals 311, 312, 313 originating from ODN 120 and upstream optical signals 321, 322, 323 originating from ODN 130. Fig. 3 further illustrates the OLT to which these upstream optical signals 311, 312, 313, 321, 322, 323 are routed by showing the upstream optical signals 331, 332, 333 arriving at the non-shared OLT 111 and the signals 341, 342, 343, 344, 345 arriving at the shared OLT 112.

During the non-combining mode 301, the optical combiner circuitry 210 may operate as a feed-through that connects the ODNs 120, 130 and the OLTs 111, 112 belonging to the same PON 101, 102. To this end, the NxN optical switch 220 may be maintained in an adjustable routing state 200 that routes ODNs 120, 130 to OLTs 111, 112, respectively. Such an adjustable routing state 200 may also be referred to as a bar state in case of a 2x2 optical switch. Upstream optical signal 311 originating from ODN 120 is thus routed to the non-shared OLT 111, as illustrated by signal 331 arriving at the non-shared OLT 111; and signal 321 originating from ODN 130 is routed to the shared OLT 112, as illustrated by signal 341 arriving at the shared OLT 112.

At timestep *t*₁ 351 the optical combiner circuitry 210 starts operating according to the combining mode 302. Signal 322, originating from ODN 130, is routed to the shared OLT 112 as the NxN optical switch 220 is still in the earlier adjustable routing state 200 of the non-combining mode 301. A next upstream optical signal 312, originating from ODN 120, is initially routed to the non-shared OLT 111 according to earlier routing state 200. Thus, the adjustable routing state 200 of the NxN optical switch 200 is adjusted such that upstream optical signal 312 is routed to the shared OLT 112 instead of the non-shared OLT 111. In other words, the routing state of the NxN optical switch 220 is dynamically changed based on whether the upstream optical signal is originating from ODN 120 or ODN 130.

To this end, the optical combiner circuitry 210 may further comprise means configured to perform detecting the upstream optical signal 312 that is routed to the non-shared OLT 111. The upstream optical signal 312 can be detected by detecting an optical power on the optical connection 225 between OLT port 221 and the non-shared OLT 111. This may be achieved by optical detection means such as, for example, an optical tap and a photodiode. These detection means may provide a signal 229 to a controller 230 upon detecting an optical power on optical connection 225, i.e. an upstream optical signal routed to the non-shared OLT 111.

The NxN optical switch 220 may thus adjust 240 its adjustable routing state to routing state 201 upon detecting 229 the upstream optical signal 312, i.e. at timestep *t*₂ 352. This can be achieved by providing a control signal 231 to the NxN optical switch 220 by controller 230. An initial portion of the preamble 332 of upstream optical signal 312 is routed to the non-shared OLT 111. The size of the initial portion of the preamble 332 is determined by the speed of detecting the upstream optical signal 312, and the speed of adjusting 240 the NxN optical switch 220 to adjustable routing state 201. The remaining portion of the preamble and the payload 343 of upstream optical signal 312 is routed to the shared OLT 112. Adjusting 240 the adjustable routing state 200, 201 is preferably performed during the preamble of an upstream optical signal to avoid losing data of within the payload of upstream optical signals.

Controller 230 may further be configured to perform determining the adjustable routing state 200, 201 that a NxN optical switch 220 should be adjusted to based on the detected optical signal. This can be particularly advantageous when a NxN optical switch 220 has more than two possible routing states, i.e. when N > 2. The control signal 231 may then include the determined adjustable routing state for the NxN optical switch 220.

A next upstream optical signal 313 may again originate from ODN 120. In this case, the current adjustable routing state 201 of the NxN optical switch 220 requires no adjustment as it routes the signal 313 to the shared OLT 112, as illustrated by 344. A following upstream optical signal 323 may originate from the ODN 130. An initial portion 333 of the preamble may again be routed to the non-shared OLT 111 before the optical signal is detected and the adjustable routing state 201 is adjusted 240 to routing state 200 at timestep *t*₃ 353. Hereafter, the remaining portion of the preamble and the payload 345 of upstream optical signal 323 are correctly routed to the shared OLT 112.

Detecting the upstream optical signals and adjusting the routing state of the NxN optical switch 220 during the preamble of an upstream optical signal allows avoiding data loss due to the combining of the ODNs. The amount of preamble data that is lost can further be limited by using NxN optical switches 220 characterized by a switching time for switching 240 between adjustable routing states 200, 201 that is substantially lower than a preamble length of the upstream optical signals.

The switching time of an NxN optical switch 220 may refer to the elapsed time to detect an upstream optical signal routed to a non-shared OLT 111 and to adjust the routing state of the NxN optical switch from a first to a second routing state 200, 201. Typical preamble lengths for PONs are around 150 ns for 50G PON according to the ITU G.9804 standard, around 130 ns for XGS PON according to the ITU G.9807 standard, and around 65 ns for XG PON according to the ITU G.987 standard. The switching time of a NxN optical switch may, for example, be at most around 50 ns, and preferably between around 10 ns and around 15 ns, within a XGS PON. The one or more NxN optical switches 220 may, for example, be electro-optic switches, acousto-optic switches, photonic crystal switches, or magneto-optic switches.

By using a NxN optical switch 220 characterized by a switching time substantially lower than a preamble length of the upstream optical signals, the remaining portion of the preamble that is routed to the shared OLT 112 after adjusting 240 the routing state of the NxN optical switch is sufficient to allow the burst-mode front end of the OLT to settle. This allows the OLT to train or tune its burst mode receiver components, e.g. a transimpedance amplifier, a clock data recovery component, and an equalizer, on the remaining preamble portion before receiving the payload of the upstream optical signal, thereby avoiding data loss. Alternatively, a dummy upstream optical signal comprising idle data may be scheduled when adjusting the routing state of the NxN optical switch 220 is desired. Alternatively, a longer preamble may be scheduled when adjusting the routing state of the NxN optical switch is desired during a period of low traffic. This has the advantage that NxN optical switches 220 with a larger switching time can be used which are typically less costly.

The optical combiner circuitry 210 allows dynamically combining upstream optical signals originating from a plurality of ODNs 120, 130 in different PONs 101, 102 to a single shared OLT 112 with limited insertion losses, i.e. a loss in optical power of upstream optical signals, as the optical combiner circuitry 210 can combine upstream optical signals without an optical splitter or fibre-optic splitter. It is thus an advantage that the optical combiner circuitry does not comprise an optical splitter configured to combine upstream optical signals originating from ODNs. This has the advantage that the optical combiner circuitry 210 can be incorporated in PONs that operate close to their margin, i.e. that already operate close to their maximum loss budget.

The optical combiner circuitry 210 further allows reducing the power consumption of a group of PONs by powering down one or more OLTs during periods of low traffic. For example, the non-shared OLT 111 may be powered down when the optical combiner circuitry 210 operates in combining mode as the shared OLT 112 services both ODN 120 and ODN 130. The optical combiner circuitry 210 further allows providing PON redundancy and protection switching with a limited additional power consumption by avoiding the power consumption associated with a standby OLT. For example, the shared OLT 112 can service its own ODN 130 and serve as a back-up OLT for OLT 111 simultaneously. When OLT 111 fails, the optical combiner circuitry may start operating in combining mode such that the shared OLT 112 services both ODN 120 and ODN 130. As such, the power consumption and cost of a standby OLT as used in dual parented Type B protection according to the ITU G.984.1 standard can be avoided. It will be apparent that this may not offer a full-rate protection as ODN 120 and ODN 130 share the bandwidth of the shared OLT 112 upon failure of OLT 111.

It is a further advantage that the optical combiner circuitry 210 can be incorporated between ODNs 120, 130 and OLTs 111, 112 of existing PONs. The optical combiner circuitry 210 may, for example, be incorporated at a central office or along the optical feeder fibres 121, 131 of the respective PONs.

When operating in the combining mode 302, the shared OLT 112 may further schedule the upstream optical signals originating from ODN 120 and ODN 130. This allows avoiding overlap between upstream optical signals originating from the combined ODNs 120, 130. Alternatively, a priority level may be assigned to the respective ODNs 120, 130 and the optical combiner circuitry may be configured to route an upstream optical signal originating from the ODN with the highest priority level to the shared OLT when an overlap between upstream optical signals occurs.

Optical combiner circuitry 210 may further be configured to operate in the combining mode 302 or in the non-combining mode 301 based on the activity of a connected OLT 111, 112. The operation mode, i.e. non-combining mode 301 or combining mode 302, of the optical combiner circuitry 210 may thus be based on the activity of one or more non-shared OLTs 111 and/or the activity of the shared OLT 112. The activity of the OLTs 111, 112 may refer to the presence of traffic within the respective PONs 101, 102, i.e. whether upstream optical signals are transmitted to an OLT and/or whether downstream optical signals are transmitted by an OLT.

In other words, the optical combiner circuitry 210 may be triggered or instructed to operate in the combining mode 302 or in the non-combining mode 301 by the activity of the OLTs 111, 112, e.g. by powering down an OLT or not scheduling bursts for an OLT. To this end, the optical combiner circuitry 210 may, for example, monitor the activity of the one or more OLTs 111, 112. Alternatively, the optical combiner circuitry 210 may receive an external control signal indicative for the activity of an OLT, i.e. a control signal that instructs the optical combiner circuitry 210 to change its operation mode 301, 302. The optical combiner circuitry may, for example, operate according to the combining mode 301 during a period of low traffic. In doing so, the limited traffic originating from the ODN 120 associated with non-shared OLT 111 is routed to the shared OLT 112. This allows powering down the non-shared OLT 111, thereby reducing power consumption. A period of low traffic may, for example, occur during night time when the amount of users that consume traffic is limited, or during start-up or commissioning of PONs when only a limited number of users are distributed over multiple newly available PONs. The combiner circuitry 210 may return to operating in the non-combining mode 301 based on the activity of the shared OLT 112, e.g. when the traffic routed to the shared OLT 112 increases beyond the capacity of the shared OLT 112.

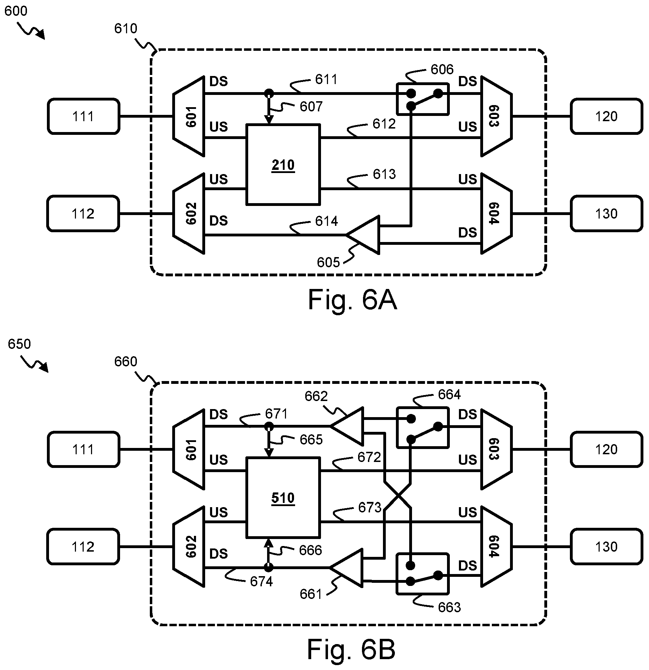

The activity of an OLT can be determined by detecting downstream optical signals originating from the OLT. This can be achieved by, for example, an optical tap and a photodiode connected to an optical fibre that propagates downstream optical signals transmitted by a non-shared OLT 111, as illustrated by 607 in Fig. 6A and 665 in Fig. 6B. For example, if the rate of detected downstream optical signals per unit of time originating from the non-shared OLT 111 is below a threshold, the optical combiner circuitry 210 may operate in the combining mode 302 as the activity of the non-shared OLT 111 is low. This allows detecting OLTs that are under-utilized, OLTs that are unused, and/or OLTs that fail. The ODNs of these OLTs may then be serviced by the shared OLT 112.

Alternatively or complementary, the activity of an OLT can be determined by detecting a burst-less period indicative of a predetermined period without upstream optical signals scheduled for the OLT. A burst-less period can be allocated by an OLT 111, 112 to the optical network units within an ODN 120, 130. Upon detecting a burst-less period allocated to ODN 120 by the non-shared OLT 111, the optical combiner circuitry 210 may operate in the combining mode 302. Upon detecting a burst-less period allocated to ODN 130 by the shared OLT 112, the optical combiner circuitry may operate in the non-combining mode 301. Detecting the burst-less period may be achieved by the detection means of the optical combiner circuitry that are configured to perform the detecting 229 of upstream optical signals, e.g. an optical tap and a photodiode. This allows signalling the desired operation mode, i.e. combining mode or non-combining mode, from the OLTs to the optical combiner circuitry without additional components or circuitries.

Alternatively or complementary, the activity of an OLT can be determined by exchanging an electrical signal over an electrical interface between the OLT and the optical combiner circuitry 210. This allows signalling the desired operation mode to the optical combiner circuitry 210 without using an optical channel 225 - 228 and limits the added insertion loss associated with an optical tap.

It can be advantageous that the upstream optical signals transmitted by ONUs within an ODN arrive as a group of consecutive upstream optical signals at the optical combiner circuitry. The groups of upstream optical signals associated with the different ODNs may arrive consecutively at the optical combiner circuitry. In other words, transmission of upstream optical signals by ONUs within ODN 120 and ODN 130 may be scheduled such that the upstream optical signals of ODN 120 are subsequently received by the optical combiner circuitry in a first group of signals, and the signals of ODN 130 are subsequently received by the optical combiner circuitry in a second group of signals ONUs. This has the further advantage that the amount of adjustments of the routing states can be limited, thereby limiting the amount of preamble that is lost due to the adjusting of the routing state.

It can further be advantageous that the first upstream optical signal in such a group associated with an ODN has a relatively high optical power. This has the further advantage that the signal is easier to detect, which can avoid erroneous adjusting of the adjustable routing states.

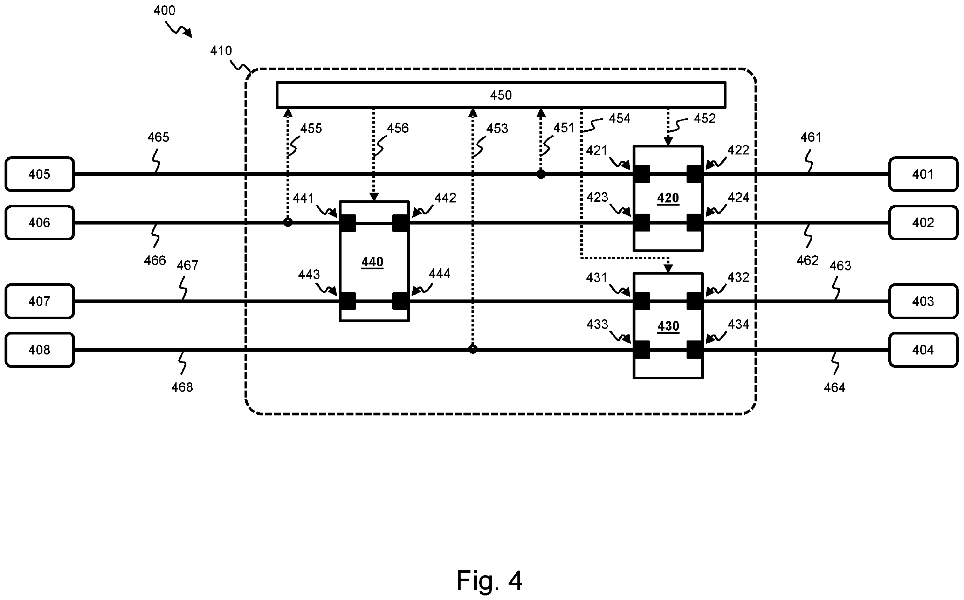

Fig. 4 shows an example embodiment of an optical combiner circuitry 410 comprising a plurality of interconnected NxN optical switches 410, 420, 440. Fig. 4 shows an example embodiment including three 2x2 optical switches 410, 420, 440. It will be apparent that the optical combiner circuitry 410 may comprise fewer or more NxN optical switches 410, 420, 440 that have the same amount of ODN/OLT ports or different amounts of ODN/OLT ports. For example, an optical combiner circuitry may include two 2x2 optical switches interconnected with one 4x4 optical switch.

The ODNs 401 - 404 are connected to respective ODN ports 422, 424, 432, 434 of one or more of the NxN optical switches 420, 430. The OLTs 405 - 408 are connected to respective OLT ports 421, 441, 443, 433 of one or more of the NxN optical switches 420, 430, 440. Some OLT ports 423, 431 of NxN optical switches 420, 430 are connected with the ODN ports 442, 424 of NxN optical switch 440, thereby interconnecting the NxN optical switches 420, 430, 440. It will thus be apparent that not all OLT ports of the NxN optical switches in the optical combiner circuitry have to be connected to OLTs, and not all ODN ports of the NxN optical switches in the optical combiner circuitry have to be connected to ODNs.

The NxN optical switches 410, 420, 440 are interconnected such that an upstream optical signal originating from any connected ODN 401, 402, 403, 404 can be routed to the shared OLT 407. In other words, at least one combination of the respective adjustable routing states of the NxN optical switches 420, 430, 440 allows to establish an optical path between any of the connected ODNs 401 - 404 and the shared OLT 407.

In this example embodiment 400, the shared OLT is predetermined to be OLT 407. To this end, the optical combiner circuitry 410 comprises means configured to perform detecting 451, 453, 455 an upstream optical signal that is routed to any of the non-shared OLTs 405, 406, 408. This can, for example, be achieved by providing an optical tap and a photodiode on the optical connections 465, 466, 468 between the optical combiner circuitry 410 and each of the non-shared OLTs 405, 406, 408. This allows detecting upstream optical signals that are not routed to the shared OLT 407, and thus, allows to detect when the adjustable routing state of the NxN optical switches 420, 430, 440 should be adjusted.

Upon detecting 451, 453, 455 an upstream optical signal being routed to any of the non-shared OLTs 405, 406, 408 due to the current routing states of the NxN optical switches 420, 430, 440, the controller 450 may adjust the routing state of one or more of the NxN optical switches 420, 430, 440 when operating in the combining mode. This allows combining a plurality of ODNs 401 - 404 to a single shared OLT 407 without using an optical splitter.

Fig. 2 and Fig. 4 show example embodiments wherein the shared OLT 112, 407 is predetermined, i.e. a fixed one of the OLTs 111, 112, 405 - 408 connected to the optical combiner circuitry 210, 410. Alternatively, the shared OLT may be any one of the OLTs connected to the optical combiner circuitry, i.e. the shared OLT may be configurable.

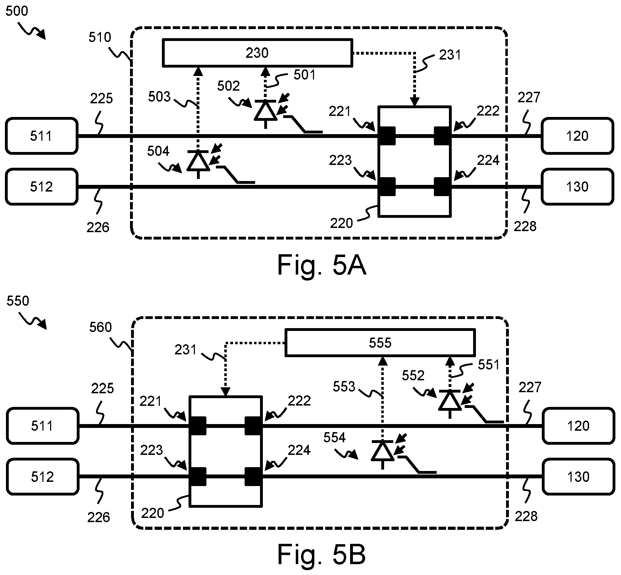

Fig. 5A shows an example embodiment of the optical combiner circuitry 510 wherein the shared OLT is configurable. The shared OLT may thus be configured to be one of the OLTs 511, 512 connected to an OLT port 221, 223 of the one or more NxN optical switches 220. In other words, the shared OLT can be selected from the OLTs 511, 512 connected to the optical combiner circuitry 510. The shared OLT can thus either be OLT 511 or OLT 512. As the shared OLT is configurable, the OLT that is configured as the shared OLT may change over time, e.g. during operation of the respective PONs 101, 102. To this end, the optical combiner circuitry 510 may comprise means for detecting an upstream optical signal that is routed to any of the OLTs 511, 512. This allows detecting upstream optical signals that are not routed to the OLT currently configured as the shared OLT, and thus, allows to detect when the adjustable routing state of the one or more NxN optical switches 220 should be adjusted.

Upstream optical signals can be detected by detecting an optical power on the optical connections 225, 226 between OLT ports 221, 223 and the connected OLTs 511, 512. In other words, detecting an upstream optical signal may occur after the upstream optical signal has travelled through, or has been routed through, a NxN optical switch. This may be achieved by optical detection means 502, 504 such as, for example, an optical tap and a photodiode. The optical combiner circuitry 510 may thus comprise detection means 502, 504 configured to perform detecting an optical power on each optical connection 225, 226 between the optical combiner circuitry 510 and the connected OLTs 511, 512, i.e. the shared OLT and the one or more non-shared OLTs. It will be apparent that providing detection means configured to perform detecting an upstream optical signal that is routed to the non-shared OLTs is sufficient when the shared OLT is predetermined, e.g. in the example embodiments of Fig. 2 and Fig. 4.

These detection means 502, 504 may provide a signal 501, 503 to a controller 230 upon detecting an optical power on optical connection 225 or 226 which allows the controller 230 to adjust 231 the adjustable routing state of the NxN optical switch 220. This allows the optical combiner circuitry 510 to combine upstream optical signals originating from ODNs 120, 130 to a configurable shared OLT, i.e. OLT 511 or OLT 512. The operation of the optical combiner circuitry is similar as explained in relation to Fig. 3.

Fig. 5B shows an example embodiment of the optical combiner circuitry 560 wherein the optical detection means 552, 554 are provided on the optical connections 227, 228 between the ODNs 120, 130 and the NxN optical switch 220. In other words, detecting an upstream optical signal may occur before the upstream optical signal has travelled through, or has been routed through, a NxN optical switch 220. This has the further advantage that the sensitivity of the optical power detection can be higher relative to detecting an optical power at the OLT ports, i.e. as illustrated in Fig. 5A, as the power of the upstream optical signal is not reduced by the limited insertion loss associated with the NxN optical switch 220.

Controller 555 may further be configured to perform tracking the current routing state of the NxN optical switches 220 of the optical combiner circuitry 560. Based on the current routing state of the NxN optical switch 220 and a detected upstream optical signal at a certain ODN port 222, 224, controller 555 can determine to which OLT port 221, 223 the upstream optical signal is currently routed. In other words, this allows determining how the adjustable routing state of the NxN optical switch 220 is to be adjusted such that the upstream optical signals are routed to the shared OLT, i.e. OLT 511 or OLT 512.

Fig. 6A shows an example embodiment of an optical circuitry 610 comprising the optical combiner circuitry 210 and comprising means configured to perform providing downstream optical signals originating from a predetermined shared OLT 112 to the ODNs 120, 130 of respective PONs 101, 102. Optical circuitry 610 allows combining upstream optical signals from a plurality of ODNs 120, 130 to a predetermined shared OLT 112 by means of the optical combiner circuitry 210, and allows providing downstream optical signals from the predetermined shared OLT 112 to the plurality of ODNs 120, 130.

To this end, the optical circuitry 610 may comprise a pair of wavelength-based splitters, 601, 603 and 602, 604, for each PON 101, 102 that is connected to the optical circuitry 610, i.e. a wavelength-based splitter for each connected OLT 111, 112 and ODN 120, 130. The optical circuitry 610 may comprise wavelength-based splitters 601, 602 connected to the respective OLTs 111, 112, thereby forming an interface between the OLTs and the optical circuitry 610. The optical circuitry 610 may further comprise wavelength-based splitters 603, 604 connected to the ODNs 120, 130, thereby forming an interface between the ODNs 120, 130 and the optical circuitry 610. The wavelength-based splitters 601 - 604 allow to split an optical signal received by the optical circuitry 610 into a downstream path 611, 612 and an upstream path 612, 614 based on the wavelength of the received signal. For example, an upstream optical signal originating from ODN 120 that is received at wavelength-based splitter 603 can be routed to an upstream path 612. Similarly, a downstream optical signal originating from OLT 111 that is received at wavelength-based splitter 601 can be routed to a downstream path 614. This allows processing the downstream optical signals and upstream optical signals in a different manner. The wavelength-based splitters 601 - 604 may have a limited insertion loss compared to general purpose splitters as they are optimized to operate in the wavelength range of upstream and downstream signals in PONs.

The upstream paths 612, 613 may be connected to the optical combiner circuitry 210 for combining upstream optical signals with limited insertion losses, e.g. as described in relation to Fig. 2 and Fig. 3. The downstream paths 611, 614 may be connected to means 605, 606 for providing downstream optical signals to both ODNs 120, 130. These means include an optical splitter 605 and a 1x2 optical switch 606. Switching the 1x2 optical switch 606 thus allows either providing the downstream optical signals transmitted by OLT 112 to both ODNs 120, 130; or providing the downstream optical signals transmitted by OLT 111 to ODN 120, and the downstream optical signals transmitted by OLT 112 to ODN 130.

Fig. 6B shows an example embodiment 650 of an optical circuitry 660 for providing downstream optical signals originating from any of the connected OLTs 111, 112 to the ODNs 120, 130. In other words, the shared OLT is configurable in the upstream and the downstream. As such, the upstream paths 672, 673 may be connected to an optical combiner circuitry 510, 560 with a configurable shared OLT, e.g. as described in relation to Fig. 5A and Fig. 5B. The downstream paths 671, 673 may be connected to means 661, 662, 663, 664 for providing downstream optical signals to both ODNs 120, 130. These means may include an optical splitter 661, 662 and a 1x2 optical switch 663, 664 for each downstream path 671, 674. Switching the 1x2 optical switch 664 thus allows either providing the downstream optical signals transmitted by OLT 112 to both ODNs 120, 130; or providing the downstream optical signals transmitted by OLT 111 to ODN 120, and the signals transmitted by OLT 112 to ODN 130. Switching the 1x2 optical switch 663 allows either providing the downstream optical signals transmitted by OLT 111 to both ODNs 120, 130; or providing the downstream optical signals transmitted by OLT 111 to ODN 120, and the signals transmitted by OLT 112 to ODN 130.

As used in this application, the term "circuitry" may refer to one or more or all of the following:
(a) hardware-only circuit implementations such as implementations in only analog and/or digital circuitry and
(b) combinations of hardware circuits and software, such as (as applicable):
   (i) a combination of analog and/or digital hardware circuit(s) with software/firmware and
   (ii) any portions of hardware processor(s) with software (including digital signal processor(s)), software, and memory(ies) that work together to cause an apparatus, such as a mobile phone or server, to perform various functions) and
(c) hardware circuit(s) and/or processor(s), such as microprocessor(s) or a portion of a microprocessor(s), that requires software (e.g. firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in a server, a cellular network device, or other computing or network device.

Although the present invention has been illustrated by reference to specific embodiments, it will be apparent to those skilled in the art that the invention is not limited to the details of the foregoing illustrative embodiments, and that the present invention may be embodied with various changes and modifications without departing from the scope thereof. The present embodiments are therefore to be considered in all respects as illustrative and not restrictive, the scope of the invention being indicated by the appended claims rather than by the foregoing description, and all changes which come within the meaning and range of equivalency of the claims are therefore intended to be embraced therein. In other words, it is contemplated to cover any and all modifications, variations or equivalents that fall within the scope of the basic underlying principles and whose essential attributes are claimed in this patent application.

It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order. Similarly, the terms "top", "bottom", "over", "under", and the like are introduced for descriptive purposes and not necessarily to denote relative positions. It is to be understood that the terms so used are interchangeable under appropriate circumstances and embodiments of the invention are capable of operating according to the present invention in other sequences, or in orientations different from the one(s) described or illustrated above.

## Claims

1. An optical combiner circuitry (210) for combining upstream optical signals originating from optical distribution networks, ODNs (120, 130), of respective passive optical networks, PONs (101, 102), to a shared optical line terminal (112), OLT, of one of the respective PONs; wherein the optical combiner circuitry comprises one or more NxN optical switches (220) configured to respectively route N ODN ports to N OLT ports according to adjustable routing states (200, 201); wherein the ODNs (120, 130) are connected to respective ODN ports (222, 224) of one or more NxN optical switches; and wherein the shared OLT (112) and one or more non-shared OLTs (111) are connected to respective OLT ports (221, 223) of one or more NxN optical switches.

2. The optical combiner circuitry according to claim 1, wherein the optical combiner circuitry is operable in a combining mode (302) and in a non-combining mode (301); wherein the one or more NxN optical switches (220) route upstream optical signals to the shared OLT (112) in the combining mode, and wherein the one or more NxN optical switches (220) route upstream optical signals originating from the ODNs (120, 130) of respective PONs (101, 102) to the OLTs (111, 112) of the respective PONs in the non-combining mode.

3. The optical combiner circuitry according to claim 2, further comprising means configured to perform, when operating in the combining mode (302), adjusting (240) the adjustable routing state of one or more NxN optical switches (220, 410, 420, 430) such that upstream optical signals are routed to the shared OLT (112, 407).

4. The optical combiner circuitry according to any of the preceding claims, wherein the shared OLT (112, 407) is predetermined; and wherein the optical combiner circuitry (210, 410) further comprises means configured to perform detecting (229, 451, 453, 455) an upstream optical signal that is routed to the one or more non-shared OLTs (111, 405, 406, 408).

5. The optical combiner circuitry according to any of the preceding claims, wherein the shared OLT is configurable as one of the OLTs (511, 512) connected to an OLT port (221, 223) of the one or more NxN optical switches (220); and wherein the optical combiner circuitry further comprises means configured to perform detecting an upstream optical signal that is routed to any of the OLTs (511, 512).

6. The optical combiner circuitry according to claim 4 or 5, wherein detecting an upstream optical signal comprises detecting an optical power at an OLT port (221, 223) of the one or more NxN optical switches.

7. The optical combiner circuitry according to claim 5, wherein detecting an upstream optical signal comprises detecting an optical power at the respective ODN ports (222, 224) of the one or more NxN optical switches, and tracking the adjustable routing state of the one or more NxN optical switches.

8. The optical combiner circuitry according to claim 2, wherein the optical combiner circuitry (220) is further configured to perform, when operating in the non-combining mode (302), maintaining the one or more NxN optical switches (220) in an adjustable routing state that routes the ODNs (120, 130) of respective PONs (101, 102) to the OLTs (111, 112) of the respective PONs.

9. The optical combiner circuitry according to claim 2, further configured to perform operating in the combining mode (301) or the non-combining mode (302) based on the activity of an OLT (111, 112) connected to an NxN optical switch.

10. The optical combiner circuitry according to claim 9, further comprising means configured to perform determining the activity of an OLT by detecting (607, 665, 666) downstream optical signals originating from an OLT (111).

11. The optical combiner circuitry according to claim 9, further comprising means configured to perform determining the activity of an OLT by detecting a burst-less period indicative of a predetermined period without upstream optical signals scheduled for the OLT (111, 112).

12. The optical combiner circuitry according to claim 9, further comprising means configured to perform determining the activity of an OLT (111,112) by exchanging an electrical signal over an electrical interface between the OLT (111,112) and the optical combiner circuitry (220).

13. The optical combiner circuitry according to any of the preceding claims, wherein the one or more NxN optical switches (220, 410, 420, 430) are **characterized by** a switching time for switching between adjustable routing states that is substantially lower than a preamble length of upstream optical signals.

14. An optical circuitry (610, 660) comprising the optical combiner circuitry for combining upstream optical signals originating from ODNs of respective PONs to a shared OLT of one of the respective PONs according to any of the preceding claims; and comprising means configured to perform providing downstream optical signals originating from the shared OLT(111, 112) to the ODNs (120, 130) of the respective PONs (101, 102).

15. The optical circuitry according to claim 14, further comprising at least four wavelength-based splitters; and wherein the means configured to perform providing downstream optical signals include at least one optical splitter (605, 661, 662), and at least one 1x2 optical switch (606, 663, 664).
